# EUROPEAN PATENT SPECIFICATION

(11) **EP 3 369 032 B1**
(45) Date of publication and mention of the grant of the patent: **01.04.2020**
(21) Application number: 16795174.8
(22) Date of filing: 26.10.2016
(51) Int. Cl.: G06F 21/64, H04L 9/32, H04L 29/06, H04W 12/10

(54) **MANAGEMENT OF INTEGRITY PROTECTION OF A LOGICAL LINK CONTROL PACKET DATA UNIT**
VERWALTUNG DES INTEGRITÄTSSCHUTZES EINER PAKETDATENEINHEIT EINER LOGISCHEN VERBINDUNGSSTEUERUNG
GESTION DE PROTECTION D'INTÉGRITÉ D'UNE UNITÉ DE DONNÉES EN PAQUETS DE COMMANDE DE LIAISON LOGIQUE

(30) Priority: 30.10.2015 US 201562248330 P
(43) Date of publication of application: 05.09.2018
(73) Proprietor: Telefonaktiebolaget LM Ericsson (PUBL), 164 83 Stockholm (SE)
(72) Inventor: DIACHINA, John Walter, Garner, North Carolina 27529 (US); JOHANSSON, Nicklas, SE-590 45 Brokind (SE); PERSSON, Claes-Göran, SE-595 95 Mjölby (SE)
(74) Representative: Ericsson
(86) International application number: PCT/SE2016/051037
(87) International publication number: WO 2017/074247

(56) References cited:
- US-A1- 2002 174 332
- ERICSSON: "Minimal Security Enhancements for GSM/GPRS to support secure delivery of MTC data", 3GPP DRAFT; GP-140615 - MINIMAL SECURITY ENHANCEMENTS FOR GSM-GPRS TO SUPPORT SECURE DELIVERY OF MTC DATA, 3RD GENERATION PARTNERSHIP PROJECT (3GPP), MOBILE COMPETENCE CENTRE ; 650, ROUTE DES LUCIOLES , vol. TSG GERAN, no. Ljubljana, Slovenia; 20140825 - 20140829 24 August 2014 (2014-08-24), XP050779905, Retrieved from the Internet: URL:http://www.3gpp.org/ftp/Meetings_3GPP_ SYNC/GERAN/Docs/ [retrieved on 2014-08-24]
- ERICSSON: "Draft contribution on Integrity protection in LLC layer and GMM layer", 3GPP DRAFT; S3B0003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. e-meeting; 20151008 5 October 2015 (2015-10-05), XP051035947, Retrieved from the Internet: URL:http://www.3gpp.org/ftp/tsg_sa/WG3_Sec urity/ADHOCs/TSGS3-ADHOC_emeeting_CIoT/Doc s/ [retrieved on 2015-10-05]
- ERICSSON ET AL: "Change request to A/Gb feasibility study: Chapter 5.7", 3GPP DRAFT; GP-022662, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Los Angeles, USA; 20020828, 28 August 2002 (2002-08-28), XP050006491, [retrieved on 2002-08-28]

## Description

### TECHNICAL FIELD

Embodiments herein relate to methods and network nodes in a wireless communication network, e.g. telecommunication network, for managing integrity protection of a Logical Link Control (LLC) Packet Data Unit (PDU).

### BACKGROUND

Communication devices such as wireless communication devices, that simply may be named wireless devices, may also be known as e.g. User Equipments (UEs), mobile terminals, wireless terminals and/or Mobile Stations (MS). A wireless device is enabled to communicate wirelessly in a wireless communication network that typically is a cellular communications network, which may also be referred to as a wireless communication system, or radio communication system, sometimes also referred to as a cellular radio system, cellular network or cellular communication system. The communication may be performed e.g. between two wireless devices, between a wireless device and a regular telephone and/or between a wireless device and a server via a Radio Access Network (RAN) and possibly one or more Core Networks (CN), comprised within the wireless communication network. The wireless device may further be referred to as a mobile telephone, cellular telephone, laptop, Personal Digital Assistant (PDA), tablet computer, just to mention some further examples. Wireless devices may be so called Machine to Machine (M2M) devices or Machine Type of Communication (MTC) devices, i.e. a device that is not necessarily associated with a conventional user, such as a human, directly using the device.

The wireless device may be, for example, portable, pocket-storable, hand-held, computer-comprised, or vehicle-mounted mobile device, enabled to communicate voice and/or data, via the RAN, with another entity, such as another wireless device or a server.

The cellular communication network covers a geographical area which is divided into cell areas, wherein each cell area is served by at least one base station, or Base Station (BS), e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is typically identified by one or more cell identities. The base station at a base station site provides radio coverage for one or more cells. A cell is thus associated with a geographical area where radio coverage for that cell is provided by the base station at the base station site. Cells may overlap so that several cells cover the same geographical area. By the base station providing or serving a cell is meant that the base station provides radio coverage such that one or more wireless devices located in the geographical area where the radio coverage is provided may be served by the base station in said cell. When a wireless device is said to be served in or by a cell this implies that the wireless device is served by the base station providing radio coverage for the cell. One base station may serve one or several cells. Further, each base station may support one or several communication technologies. The base stations communicate over the air interface operating on radio frequencies with the wireless device within range of the base stations.

In some RANs, several base stations may be connected, e.g. by landlines or microwave, to a radio network controller, e.g. a Radio Network Controller (RNC) in Universal Mobile Telecommunication System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communication (originally: Groupe Special Mobile).

In 3rd Generation Partnership Project (3GPP) Long Term Evolution (LTE), base stations, which may be referred to as eNodeBs or eNBs, may be directly connected to other base stations and may be directly connected to one or more core networks.

UMTS is a third generation mobile communication system, which may be referred to as 3rd generation or 3G, and which evolved from the GSM, and provides improved mobile communication services based on Wideband Code Division Multiple Access (WCDMA) access technology. UMTS Terrestrial Radio Access Network (UTRAN) is essentially a radio access network using wideband code division multiple access for wireless devices.

General Packet Radio Service (GPRS) is a packet oriented mobile data service on the 2G and 3G cellular communication system's global system for mobile communications (GSM).

Enhanced Data rates for GSM Evolution (EDGE) also known as Enhanced GPRS (EGPRS), or IMT Single Carrier (IMT-SC), or Enhanced Data rates for Global Evolution is a digital mobile phone technology that allows improved data transmission rates as a backward-compatible extension of GSM.

High Speed Packet Access (HSPA) is an amalgamation of two mobile telephony protocols, High Speed Downlink Packet Access (HSDPA) and High Speed Uplink Packet Access (HSUPA), defined by 3GPP, that extends and improves the performance of existing 3rd generation mobile telecommunication networks utilizing the WCDMA. Such networks may be named WCDMA/HSPA.

The 3GPP has undertaken to evolve further the UTRAN and GSM based radio access network technologies, for example into evolved UTRAN (E-UTRAN) used in LTE.

The expression downlink, which may be abbreviated DL, is used for the transmission path from the base station to the wireless device. The expression uplink, which may be abbreviated UL, is used for the transmission path in the opposite direction i.e. from the wireless device to the base station.

Machine Type of Communication (MTC) has in recent years, especially in the context of the Internet of Things (loT), shown to be a growing market segment for cellular technologies, especially for GSM/EDGE with its more or less global coverage, ubiquitous connectivity and price competitive devices. Realization of loT benefit from utilizing cellular technologies and GSM technology is of great, perhaps of greatest, interest to utilize at least initially. In general it is desirable to be able to (re)use existing wireless communication systems and cellular technologies for new type of devices such as MTC devices. An MTC device is typically a wireless device that is a self and/or automatically controlled unattended machine and that is typically not associated with an active human user in order to generate data traffic. A MTC device is typically much more simple, and associated with a more specific application or purpose, than and in contrast to a conventional mobile phone or smart phone. MTC involve communication to and/or from MTC devices, which communication typically is of quite different nature and with other requirements than communication associated with e.g. conventional mobile phones and smart phones. In the context of and growth of the loT it is evidently so that MTC traffic will be increasing and thus needs to be increasingly supported in wireless communication systems.

Problem related to (re)using existing technologies and systems is e.g. that the requirements for the new type of devices typically is different than conventional requirements, e.g. regarding the type and amount of traffic, performance etc. Existing systems have not been developed with these new requirements in mind. Also, traffic generated by new type of devices will typically be in addition to conventional traffic already supported by an existing system, which existing traffic typically needs to continue to be supported by and in the system, preferably without any substantial disturbance and/or deterioration of already supported services and performance.

Any modifications need of existing systems and technology should of course be cost efficient, such as enabled by low complexity modifications, and preferably allowing legacy devices already being employed to continue to be used and co-exist with the new type of devices in one and the same wireless communication system.

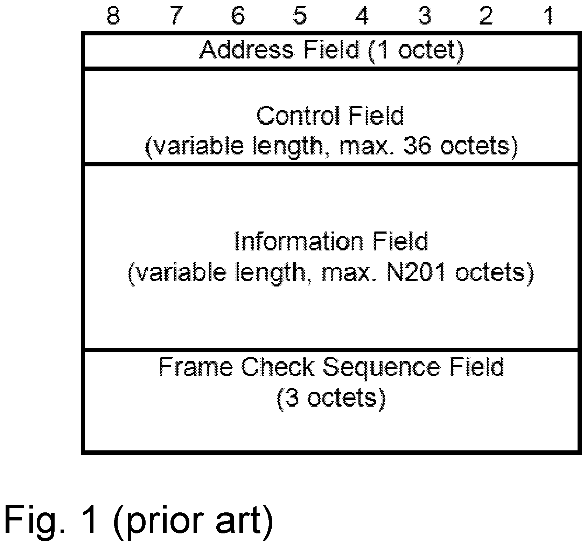

A Logical Link Control (LLC) layer protocol to be used in GSM networks for packet data transfer between a Mobile Station (MS) and Serving GPRS Support Node (SGSN) is defined in 3GPP TS 44.064 version 12.0.0. The LLC protocol layer supports the transmission of LLC Packet Data Units (PDUs) which may be ciphered depending on whether or not Non-Access Stratum (NAS) signaling procedures have enabled the use of ciphering and LLC entities, at the MS and SGSN, have been configured accordingly. Once ciphering has been configured at the LLC layer, protocol entities at MS and SGSN that use the LLC layer can pass it service primitives that include a user plane PDU and an indication of whether or not to cipher the user plane PDU. The control field portion of a LLC PDU header includes information, an "encryption mode bit", see e.g. 3GPP TS 44.064 version 12.0.0, chapter 6.3.5.5, that indicates if the Information and Frame Check Sequence (FCS) fields of that LLC PDU, see **Figure 1****,** have been ciphered by the sending LLC entity, thereby allowing a peer, i.e. receiving, LLC entity to determine if it needs to decipher the LLC PDU before further processing of that LLC PDU can occur. The 3GPP Draft, GP-140615, entitled "minimal security enhancements for GSM-GPRS to support secure delivery of MTC data" is a further relevant document that proposes the inclusion of a message authentication code in the LLC PDU of a communcated message.

It is desirable to enhance security offered by the LLC layer, especially for a case where no or only weak ciphering has been configured.

### SUMMARY

It is an object to alleviate or at least reduce one or more problems indicated above. Hence, the object may be to provide one or more improvements with regard to security offered by LLC layer handling in a wireless communication network, such as a telecommunications network, in particular when the wireless communication network is a GSM network or a GSM based communication network.

According to a first aspect of embodiments herein, the object is achieved by a first method, performed by a first node, for managing integrity protection of a Logical Link Control (LLC) Packet Data Unit (PDU). The first node being configured to communicate in a wireless communication network. The first node provides an LLC PDU with an indicator that indicates that an integrity protection has been applied to at least part of the LLC PDU. The first node then sends the LLC PDU with the indication to another, second node.

According to a second aspect of embodiments herein, the object is achieved by a computer program comprising instructions that when executed causes the first node to perform the first method according to the first aspect.

According to a third aspect of embodiments herein, the object is achieved by a computer readable medium comprising the computer program according to the second aspect.

According to a fourth aspect of embodiments herein, the object is achieved by a second method, performed by a second node, for managing integrity protection of a LLC PDU. The second node being configured to communicate in a wireless communication network. The second node receives, from a first node, an LLC PDU with an indicator that indicates that an integrity protection has been applied to at least part of the LLC PDU. Th second node then identifies, based on the indication, that the received LLC PDU applies integrity protection.

According to a fifth aspect of embodiments herein, the object is achieved by a computer program comprising instructions that when executed causes the second node to perform the second method according to the fourth aspect.

According to a sixth aspect of embodiments herein, the object is achieved by a computer readable medium comprising the computer program according to the fifth aspect.

According to a seventh aspect of embodiments herein, the object is achieved by a first node for managing integrity protection of a LLC PDU. The first node being configured to communicate in a wireless communication network and further configured to provide an LLC PDU with an indicator that indicates that an integrity protection has been applied to at least part of the LLC PDU. The first node is further configured to send the LLC PDU with the indication to another, second node.

According to an eight aspect of embodiments herein, the object is achieved by a second node for managing integrity protection of a LLC PDU. The second node being configured to communicate in a wireless communication network and to receive, from a first node, an LLC PDU with an indicator that indicates that an integrity protection has been applied to at least part of the LLC PDU. The second node is further configured to identify, based on the indication, that the received LLC PDU applies integrity protection.

For some or all aspects above, the indicator may indicate that a Message Authentication Code (MAC) field is comprised in the LLC PDU, which MAC field relates to said integrity protection.

Embodiments herein enable additional security to be added to a LLC protocol layer of the wireless communication network, preferably a GSM network, at the same time as it is enabled relative simple implementation with no or at least no significant impact to an involved radio network node, e.g. a BSS in GSM. For example, the indicator and introduction of the MAC field within the LLC PDU, enable implementation by relatively small modifications of NAS signaling procedures to include information required for enabling the use of integrity protection at LLC entities, e.g. both at the wireless device and the core network node, such as, in GSM, both at the MS and the SGSN, in such way that there will be no or at least no significant impact to the radio network node involved in the signaling, e.g. BSS in GSM.

### BRIEF DESCRIPTION OF THE DRAWINGS

The various aspects of embodiments disclosed herein, including particular features and advantages thereof, will be readily understood from the following detailed description and the accompanying schematic drawings.
Figure 1 shows an example of a prior art LLC PDU.
Figure 2 is a block diagram schematically depicting an example of a wireless communication network in which embodiments herein may be implemented.
Figure 3 is a combined signaling diagram and flowchart for describing some embodiments herein.
Figure 4 shows a prior art LLC PDU header control field format.
Figure 5 shows an example of an enhanced LLC frame format, according to some embodiments herein, with a MAC field.
Figure 6 depicts an example of an enhanced allocation of SAPI values compared to a prior art allocation.
Figure 7 is a flowchart schematically illustrating embodiments of a first method according to embodiments herein.
Figure 8 is a functional block diagram for illustrating embodiments of an first node according to embodiments herein and how it can be configured to carry out the first method.
Figure 9 is a flowchart schematically illustrating embodiments of a second method according to embodiments herein.
Figure 10 is a functional block diagram for illustrating embodiments of a second node according to embodiments herein and how it can be configured to carry out the second method.
Figures 11a-c are schematic drawings illustrating embodiments relating to computer programs and computer readable media to cause the first node and/or the second node to perform the first method and/or second method, respectively.

### DETAILED DESCRIPTION

Throughout the following description similar reference numerals have been used to denote similar elements, units, modules, circuits, nodes, parts, items or features, when applicable. In the figures, features that appear in some embodiments are typically indicated by dashed lines.

In the following, embodiments herein are illustrated by exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

As part of the development towards embodiments herein, the problem indicated in the Background will first be further discussed as well as a general solution underlying embodiments herein.

To enhance the security offered by the LLC layer, especially for the case where no or only weak ciphering has been configured, a feature known as integrity protection can be added, whereby a Message Authentication Code (MAC) can be used to authenticate each LLC PDU. In other words, a MAC can be generated for each LLC PDU to provide integrity and authenticity assurances on the PDU. Such integrity protection allows for detecting accidental, i.e. unintentional, as well as intentional message changes, while authenticity allows for affirming the message's origin. A benefit with adding integrity protection on the LLC layer is that both signaling and user plane data carried in the LLC PDUs will be integrity protected. Currently, there exists no means to include a MAC code on the LLC layer.

A MAC algorithm, sometimes called a keyed, i.e. cryptographic, hash function, accepts as input a secret key and an arbitrary-length message to be authenticated, and outputs a MAC value, sometimes known as a tag. Note that a cryptographic hash function is only one of the possible ways to generate MACs. The MAC value can be used to protect both a message's data integrity as well as its authenticity, by allowing verifiers, that possess the secret key, to detect any changes to the message content.

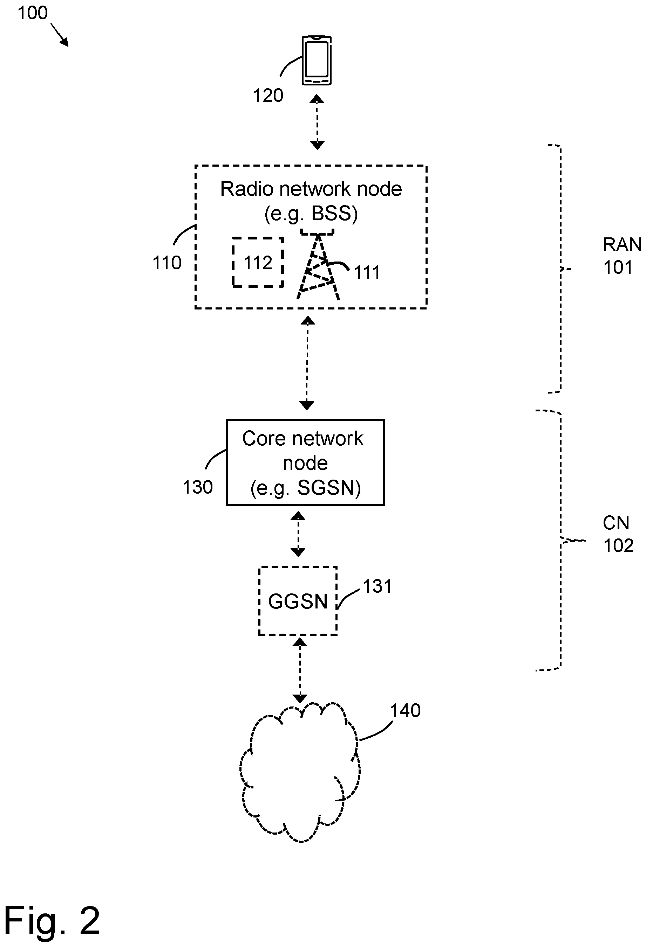

**Figure 2** is a schematic block diagram schematically depicting an example of **a wireless communication network 100** in which embodiments herein may be implemented. The wireless communication network 100 is typically a telecommunication network or system, such as a cellular communication network that typically is a GSM network or a GSM based communication network. It may comprise a **RAN 101** part and **a core network (CN) 102** part.

**A radio network node 110** is shown comprised in the wireless communication network 100 and in the RAN 101. The radio network node 110 may be or be comprised in a Base Station Subsystem (BSS), e.g. such supporting GSM/EDGE, for example when the when the wireless communication network 100 is a GSM network or a GSM based communication network. The radio network node 110 may be or comprise a base station 111, e.g. a Base Transceiver Station (BTS) of said BSS. The radio network node 110 may further comprise a controlling node 112 of a base station, which may control one or more base stations, including e.g. the base station 111, and may be a Base Station Controller (BSC) of said BSS.

The radio network node 110 may serve and/or control and/or manage one or more wireless devices, e.g. MSs, such as **a wireless device 120** shown in the figure, which are supported by and/or operative in the wireless communication network 100. The wireless device may be of any type discussed herein.

Further, **a core network node 130** is shown comprised in the wireless communication network 100 and in the CN 102. The core network node 130 is typically a SGSN when the wireless communication network 100 is a GSM network or a GSM based communication network.

The wireless device 120 may communicate with the core network node over the radio network node 110. The CN 102 may provide access for the wireless device to **an external network 140,** e.g. the Internet. The wireless device 120 may thus communicate via the RAN 101 and the CN 102 with the external network 140. When the wireless communication network 100 is a GSM network or a GSM based communication network, the access to the external network is via a Gateway GPRS Support Node (GGSN), such as the GGSN 131 illustrated in the figure.

Attention is drawn to that Figure 2 is only schematic and for exemplifying purpose and that not everything shown in the figure may be required for all embodiments herein, as should be evident to the skilled person. Also, a wireless communication network or networks that in reality correspond(s) to the wireless communication network 100 will typically comprise several further network nodes, such as base stations, etc., as realized by the skilled person, but which are not shown herein for the sake of simplifying.

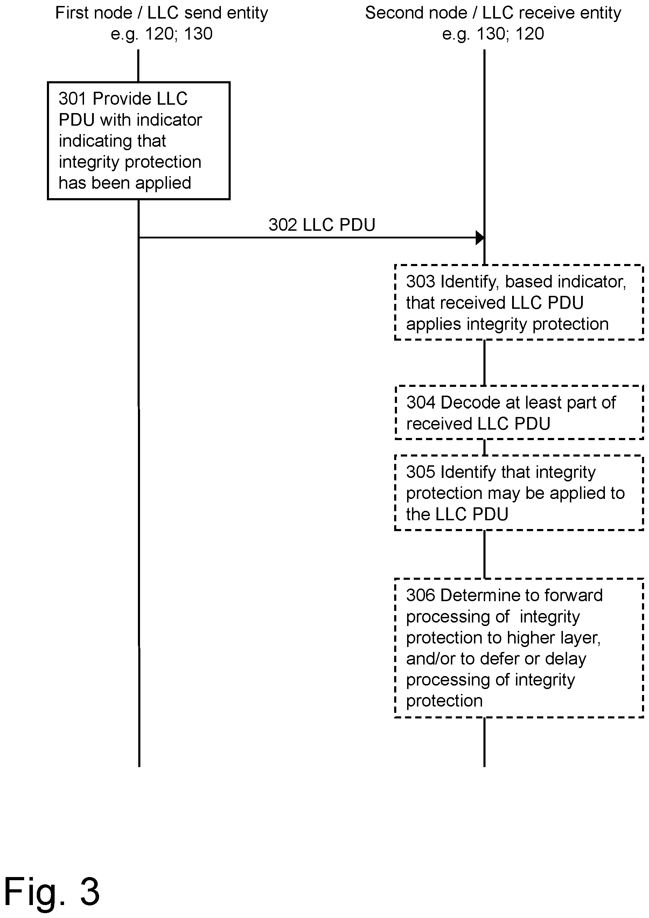

**Figure 3** depicts a combined signaling diagram and flowchart, which will be used to discuss embodiments herein. In the figure, there is a first node that may be a LLC send entity and may e.g. correspond to the wireless device 120, i.e. may be a MS, or may e.g. correspond to the core network node 130 of the wireless communication network 100, i.e. may be a SGSN. In the figure, there is also a second node may be LLC receive entity and may e.g., correspond to the core network node 130 of the wireless communication network 100, i.e. may be a SGSN, or may e.g. correspond to the wireless device 120, i.e. may be a MS. In embodiments and examples herein, when the first node is the wireless device 120, the second node is typically the core network node 130, and vice versa. In practise a node, e.g. the wireless device 120 or core network node 130, typically comprises both a LLC send entity and a LLC receive entity, i.e. comprises both LLC send and receive functionality, so it can both send and receive over the LLC layer. In other words, in practise, a wireless device, e.g. the wireless device 120 may implement embodiments of both the first and second node, and a core network node, e.g. the core network node 130, may implement embodiments of both the first and second node.

The methods and actions discussed in the following are for managing integrity protection of a LLC PDU. The first node is configured to communicate in a wireless communication network, e.g. the wireless communication network 100. Also the second node is configured to communicate in a wireless communication network, e.g. the wireless communication network 100.

The actions below may be taken in any suitable order and/or be carried out fully or partly overlapping in time when this is possible and suitable.

### Action 301

The first node provides an LLC PDU with an indication that indicates that an integrity protection has been applied to at least part of the LLC PDU. The indication may indicate that a Message Authentication Code (MAC) field is comprised in the LLC PDU, which MAC field relates to integrity protection. The indication is preferably comprised in a control field of the LLC PDU, and preferably in a header of the LLC PDU. The indication may alternatively e.g. be comprised in an address field of the LLC PDU. The indication may be accomplished by means of one or more specific bits, for example, spare bits of a conventional control field or address field, which may be set to a certain value to accomplish the indication. The indication may be in the form of an indicator or identifier, In the latter case the identifier more specifically provides identification rather than only indication.

The MAC field may be placed immediately before or after a Frame Check Sequence (FCS) field of the LLC PDU, and may be included in or excluded from any ciphered portion of the LLC PDU. If excluded, the MAC field may advantageously be placed immediately after the FCS field, thereby enabling simpler implementation. The MAC field may fully or partly be comprised in the FCS field, thereby reducing a total number of bits of the LLC PDU.

The applied integrity protection may relate to one or more fields comprised in the LLC PDU, which one or more fields thus may have been used for generating the integrity protection. Said one or more fields may be one or more of the following: an address field, a control field, an information field and a FCS field.

### Action 302

The first node sends the LLC PDU with the indication to the second node that receives it.

The MAC field is preferably of a predefined or predetermined length, e.g. a fixed length, so that its length can be known by the second node when it has received the LLC PDU and e.g. shall decode at least part of the LLC PDU. This may enable the second node to decode a variable length field, e.g. an information field, of the LLC PDU, which in turn may enable the second node to process information, e.g. in the information field, without having to support the integrity protection, e.g. without being able to handle, such as act on or process, the MAC field. The information field may e.g. comprise a NAS message.

In some embodiments, the LLC PDU comprises an identifier identifying that the first node, i.e. the sender of the LLC PDU, is able to apply integrity protection, i.e. such integrity protection as discussed herein. The identifier may be of a certain type and/or be associated with a certain value associated with a predetermined meaning that the first node is able to apply and/or has applied integrity protection. The identifier may e.g. be a Service Access Point Identifier (SAPI) that may be comprised in a SAPI field of the LLC PDU, and may be associated with a certain value or code point.

Said one or more specific bits, e.g. in the control field or address field, may not only indicate that the integrity protection has been applied, but also that a certain ciphering key, typically a user plane ciphering key, is applicable to the integrity protection. For example, indicate that a MAC field is present in the LLC PDU and also that a ciphering key as just mentioned is applicable to that MAC field.

Further, other one or more bits, i.e. that may be different from said one or more bits that may accomplish the indication that the integrity protection has been applied, may indicate that the MAC field is present in the LLC PDU and/or that the ciphering key is applicable to that MAC field. Said other one or more other specific bits may also be present in the control field or address field in a similar manner.

Alternatively or additionally, a SAPI field, such as the SAPI field mentioned above, may be used to indicate whether a user plane ciphering key, e.g. such as mentioned above, or a control plane ciphering key is applicable to the MAC field. For example, use of a first LLGMM SAPI may indicate that the user plane ciphering key is applicable to the MAC field and use of a another, second LLGMM SAPI may indicate that the control plane ciphering key is applicable to the MAC field.

### Action 303

The second node may identify, based on the indication, that the received LLC PDU applies integrity protection. For example, the second node may identify said one or more bits that indicate that the first node has applied integrity protection to the received LLC PDU. The second node may thereby be enabled to perform an integrity protection check, i.e. a verification, before further processing of the LLC PDU or parts thereof, e.g. of said at least part that the integrity protection has been applied to.

### Action 304

The second node may decode at least part of the received LLC PDU, e.g. at least an information field thereof, such as the information field discussed above. This action may be performed when the second node does not support the integrity protection, e.g. that the second node is, at least for the moment, not able to handle, e.g. to process or act on, the MAC field, and/or is not able to identify, based on the indication, that the received LLC PDU applies integrity protection. For example, the present action may be performed when the second node does not recognize the indication.

### Action 305

The second node may identify, e.g. based on the decoded at least part, that integrity protection may be applied to the LLC PDU. The identification may comprise that the second node identifies that the LLC PDU comprises said identifier identifying that the first node, i.e. the sender of the LLC PDU, is able to apply integrity protection

### Action 306

Further, the second node may determine, based on the identification, to forward processing of the integrity protection, e.g. of the MAC field, to a higher layer, e.g. a NAS layer and/or to defer or delay processing of the of the integrity protection to a later point in time. The determination in the present action may further be in response to that the second node does not support the integrity protection, e.g. that the second node is not able to handle, e.g. to process or act on, the MAC field.

The forwarding may contain content of said information field.

The later point in time may be when the second node has been configured to support the integrity protection, e.g. when the second node has become able to handle, e.g. to process or act on, the MAC field.

Details and examples regarding embodiments described above, as well as further embodiments, and how they can be implemented will now be discussed.

A first group of embodiments is based on that NAS signaling procedures can be modified and used to include information for enabling the use of integrity protection at LLC entities at both a MS and a SGSN, e.g. both at the wireless deice 120 and the core network node 130. The first group of embodiments may fully or partly relate to Actions 301-303 discussed above. Once such NAS signaling has been completed and the LLC entities at the MS and SGSN have been configured accordingly, protocol entities at the MS and SGSN that use the LLC layer can pass its service primitives that may include a user and/or control plane PDU and an indication of whether or not to apply integrity protection to that user and/or control plane PDU.

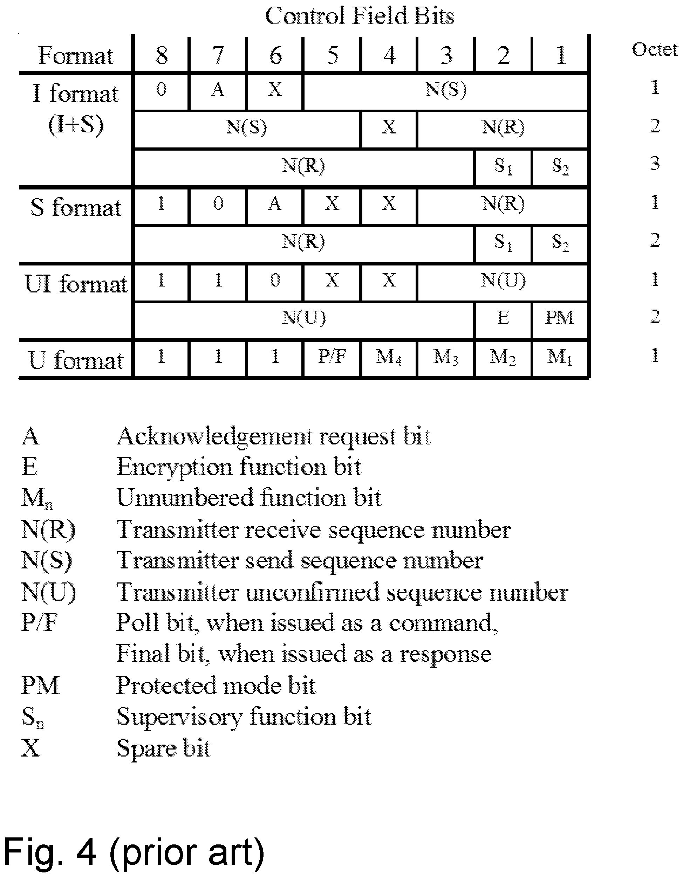

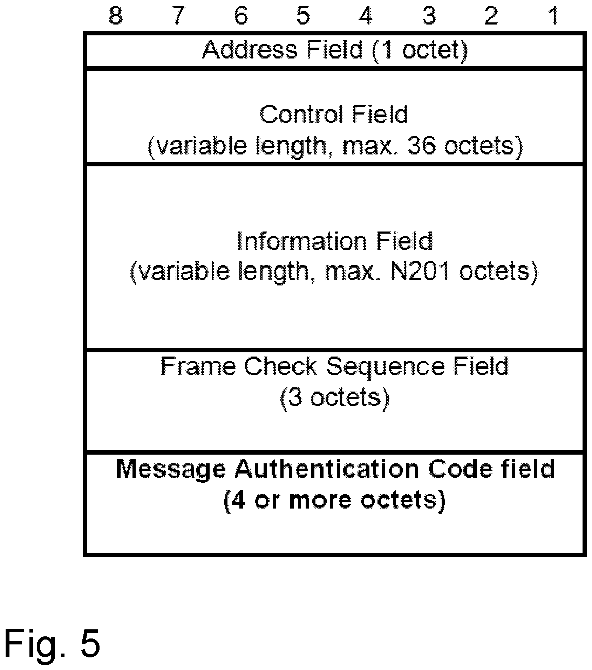

The control field portion of a conventional LLC PDU header includes spare bits, see e.g. **Figure 4** showing a conventional control field format and the bits marked as "X". The spare bits can be used to indicate if integrity protection has been applied by the sending LLC entity, i.e. one or more of the Address field, Control field, Information field and FCS field of that LLC PDU may have been used for generating a Message Authentication Code field. An enhanced LLC frame format with a MAC field is shown in **Figure 5****.** Thereby the peer, i.e. receiving, LLC entity is allowed to determine if it needs to perform an integrity protection check before further processing of that LLC PDU may occur.

If a bit in the Control Field indicates that integrity protection has been applied then the receiving LLC entity knows that the Message Authentication Code field, such as shown in Figure 5, is present within the received LLC PDU. Otherwise, the receiving LLC entity may assume it has received a LLC PDU formatted as per Figure 1. Note that there are also spare bits available in the Address field and one of them could alternatively be used to indicate whether or not integrity protection has been applied, e.g. indicate whether or not the MAC field is present.

The Message Authentication Code field shown in Figure 5 is located after the Frame Check Sequence field but may alternatively be located immediately before the Frame Check Sequence field. In either case, assuming ciphering is enabled, the Message Authentication Code field may either be included as part of the ciphered portion of the LLC PDU or excluded therefrom. If excluded from the ciphered portion of the LLC PDU the Message Authentication Code field should be placed immediately after the Frame Check Sequence field for a slightly simpler implementation of the ciphering procedure.

The Message Authentication Code shown in Figure 5 may alternatively, in the interest of reducing the number of bits to be sent across the air interface, use the complete or parts of the 3 byte FCS field. For example with a 4 byte MAC field, 3 bytes of the FCS field could be used thus requiring only one additional byte to complete the 4 byte MAC field. In another example, 2 bytes of the FCS field is used for the MAC code thus requiring 2 additional bytes to complete the 4 byte MAC field.

Note that the LLC PDU may be carried as an information element within a UL-UNITDATA or DL-UNITDATA PDU, see e.g. 3GPP TS 48.018, version 12.4.0, which includes a length indicator for the LLC PDU thereby allowing the receiving LLC entity to determine exactly where each field therein begins and ends. Since the Address field and Frame Check Sequence field both have fixed lengths and the Control field length is determined as it is interpreted, the receiving LLC entity will be able to determine how long the Information field is when it knows the length of the LLC PDU. When the fixed length Message Authentication Code field is present, such as illustrated in Figure 5, the receiving LLC entity will similarly be able to determine the length of the Information field.

In a second group of embodiments, that fully or partly may relate to Actions 301, 302, 304-307 discussed above, there may be cases where the sending LLC entity is able to apply integrity protection, e.g. since it has been configured to do so, but the receiving LLC entity has not yet been configured to verify integrity protected LLC PDUs. If this happens then the receiving LLC PDU may still process the Information field of the LLC PDU, e.g. containing a NAS layer message, but not act on the MAC. Instead the receiving LLC entity may defer the processing of the MAC field until a later time or even send it to a higher layer, e.g. a NAS layer, for further processing along with the content of the Information field. For example, this may happen in one or more of the following exemplary scenarios:
- NAS signaling is ongoing whereby the sender of a NAS layer message has the key it needs to enable the LLC layer to apply integrity protection to LLC PDU used to carry that NAS layer message whereas the receiver of that LLC PDU will first need to process the NAS layer message carried therein before it can determine the key applicable for performing integrity protection verification. In this case the sending LLC entity applies integrity protection to the LLC PDU used to carry the NAS layer message, where a bit in the LLC PDU control field may indicate that the MAC layer field is present, and as such the receiving LLC entity then may realize that integrity protection has been applied to that LLC PDU even though it knows it has not yet been configured to apply integrity protection.
- The receiving LLC entity sends the payload of the LLC PDU Information field, such as a NAS layer message, up to the NAS layer for further processing but defers processing of the MAC field. Once the NAS layer message has been processed the key applicable to integrity protection will be known and the LLC layer of the receiving LLC entity can then be configured to enable the integrity protection feature. The MAC field for which processing was deferred can now be verified by the receiving LLC entity.
- The receiving LLC entity, upon determining that integrity protection related processing needs to be deferred, may choose to send both a NAS layer message carried in the Information field and the MAC field up to the NAS layer so that the NAS layer itself can perform the integrity protection check once it has access to the applicable key.

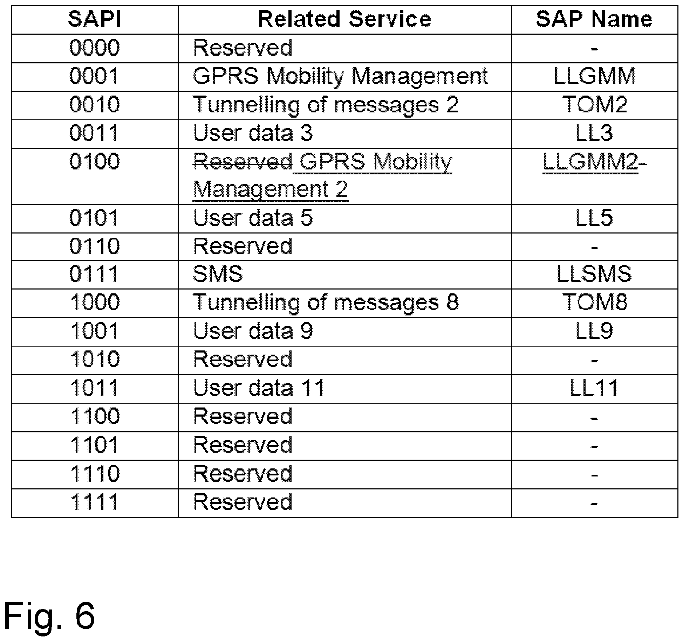

- Alternatively, the receiving LLC entity may only send the NAS signaling message up to the NAS layer, wait to be configured with the key appropriate for performing the integrity protection procedure, and then once configured it can verify the validity of the MAC field for which processing was deferred.
- A new LLC SAPI field may be defined, e.g. a code point 0100, for this special case where the sending LLC is able to apply integrity protection but the receiving LLC entity is not yet able to apply integrity protection. See e.g. **Figure 6** for an example of an enhanced allocation of SAPI values compared to a prior art allocation. Upon reception of a LLC PDU containing this new LLC SAPI field, the receiving LLC entity will know that deferred treatment of the MAC layer field may be needed.

A specific bit in the control field or address field may not only indicate that a MAC field is present in the LLC PDU but also that the user plane ciphering key is applicable to the MAC field. A different bit in the control field or address field may not only indicate that a MAC field is present in the LLC PDU but also that the control plane ciphering key is applicable to the that MAC field. Alternatively the SAPI field referenced above may be used to indicate whether the user plane or the control plane ciphering key is applicable to the that MAC field. For example, the use of a legacy LLGMM SAPI, such as shown in Figure 6, may indicate the user plane ciphering key is applicable to the that MAC field and the use of another, LLGMM SAPI field, such as the LLGMM2 SAPI shown in Figure 6, may indicate the control plane ciphering key is applicable to the that MAC field).

Embodiments herein and advantages thereof for example relate to:
Additional security may be added to a LLC protocol layer by introducing a Message Authentication Code (MAC) field within an LLC PDU, which field may be an N octet, where N may be equal to 4 or more. A spare bit in the Control field of the LLC PDU header, or spare bits in the Address field, may be used to indicate when the MAC field is present therein.

Alternatively, additional security may be added to the LLC protocol layer by using the complete or parts of the FCS field to achieve the MAC field. A spare bit in the Control field of the LLC PDU header, or spare bits in the Address field, may be used to indicate when the MAC field is present therein.

Further, embodiments herein, such as described above, enable no or at least no significant impact to an involved radio network node, e.g. the radio network node 110, such as a BSS, if e.g. NAS signaling procedures are modified to include information required for enabling the use of integrity protection at the LLC entities at both the wireless device 120 and the core network node 130, e.g. both MS and SGSN.

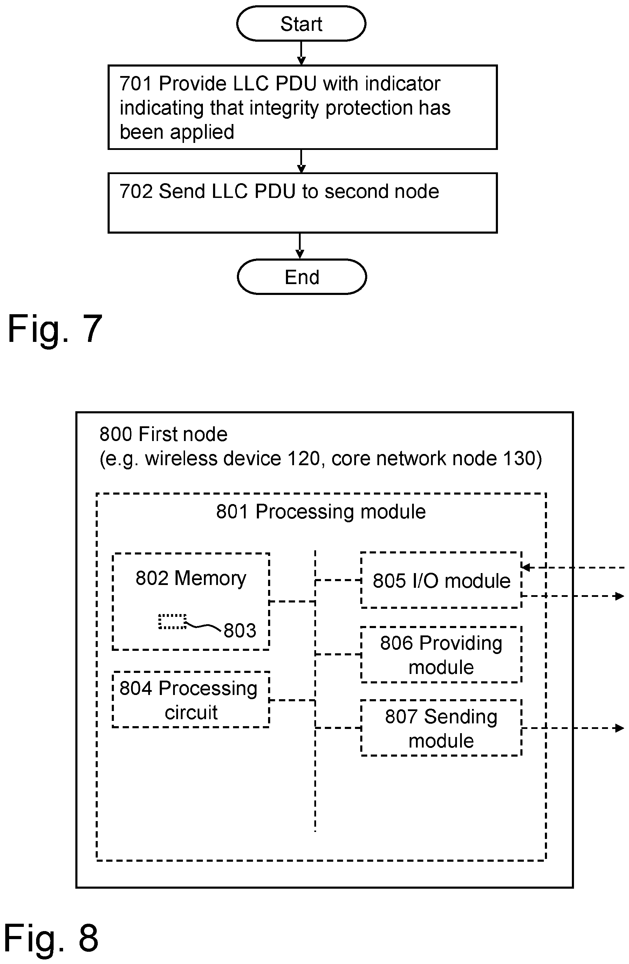

**Figure 7** is a flow chart schematically illustrating embodiments of a first method, performed by a first node, for managing integrity protection of a LLC PDU.

The first method comprises the following actions, which actions may be taken in any suitable order and/or be carried out fully or partly overlapping in time when this is possible and suitable.

### Action 701

The first node provides an LLC PDU with an indicator that indicates that an integrity protection has been applied to at least part of the LLC PDU.

In some embodiments, the indicator indicates that a MAC field is comprised in the LLC PDU, which MAC field relates to said integrity protection. The MAC field may be placed immediately before a FCS field of the LLC PDU. The MAC field is advantageously of a predetermined length. In some embodiments, the MAC field is included in a ciphered portion of the LLC PDU.

In some embodiments, the indicator is comprised in a control field and/or header of the LLC PDU. The indicator may be accomplished by means of one or more specific bits of the control field.

This action may fully or partly correspond to action 301 as described above.

### Action 702

The first node sends the LLC PDU with the indication to another, second node.

In some embodiments, the first node is a wireless device, e.g. the wireless device 120 and the second node is a core network node, e.g. the core network node 130, configured to be operative in a core network, e.g. the core network 102, part of a wireless communication network, e.g. the wireless communication network 100. In some embodiments, the second node is instead a wireless device, e.g. the wireless device 120, and the first node is instead a core network node, e.g. the core network node 130, configured to be operative in a core network, e.g. the core network 102, part of the wireless communication network, e.g. the wireless communication network 100.

This action may fully or partly correspond to action 302 as described above.

**Figure 8** is a schematic block diagram for illustrating embodiments of how **a first node 800,** such as the first node discussed above, e.g. the wireless device 120 or the core network node 130, may be configured to perform the first method and actions discussed above in connection with Figure 3 and 7, and/or one or more other actions described herein.

The first node 800 may comprise one or more of the following:
**A processing module 801,** such as a means, one or more hardware modules, including e.g. one or more processors, and/or one or more software modules for performing said methods and/or actions.

**A memory 802,** which may comprise, such as contain or store, **a computer program 803.** The computer program 803 comprises 'instructions' or 'code' directly or indirectly executable by the first node 800 so that it performs the said methods and/or actions. The memory 802 may comprise one or more memory units and may be further be arranged to store data, such as configurations and/or applications involved in or for performing functions and actions of embodiments herein.

**A processing circuit 804** as an exemplifying hardware module and may comprise or correspond to one or more processors. In some embodiments, the processing module 801 may comprise, e.g. 'is embodied in the form of' or 'realized by' the processing circuit 804. In these embodiments, the memory 802 may comprise the computer program 803 executable by the processing circuit 804, whereby the first node 800 comprising it is operative, or configured, to perform said method and/or actions.

**An Input/Output (I/O) module 805,** configured to be involved in, e.g. by performing, any communication to and/or from other units and/or nodes, such as sending and/or receiving information to and/or from other external nodes or devices. The I/O module 805 may be exemplified by an obtaining, e.g. receiving, module and/or a sending module, when applicable.

The first node 800 may also comprise other exemplifying hardware and/or software module(s), which module(s) may be fully or partly implemented by the processing circuit 804 and that may be operative, or configured, to perform actions as discussed herein. For example, the first node 800 may comprises one or more of **a providing module 806** and **a sending module 807.**

The first node 800 and/or the processing module 801 and/or the processing circuit 804 and/or the providing module 806 may be operative, or configured, to provide the LLC PDU with the indicator that indicates that said integrity protection has been applied to at least part of the LLC PDU.

The first node 800 and/or the processing module 801 and/or the processing circuit 804 and/or the I/O module 805 and/or the sending module 807 may be operative, or configured, to send the LLC PDU with the indication to said another, second node.

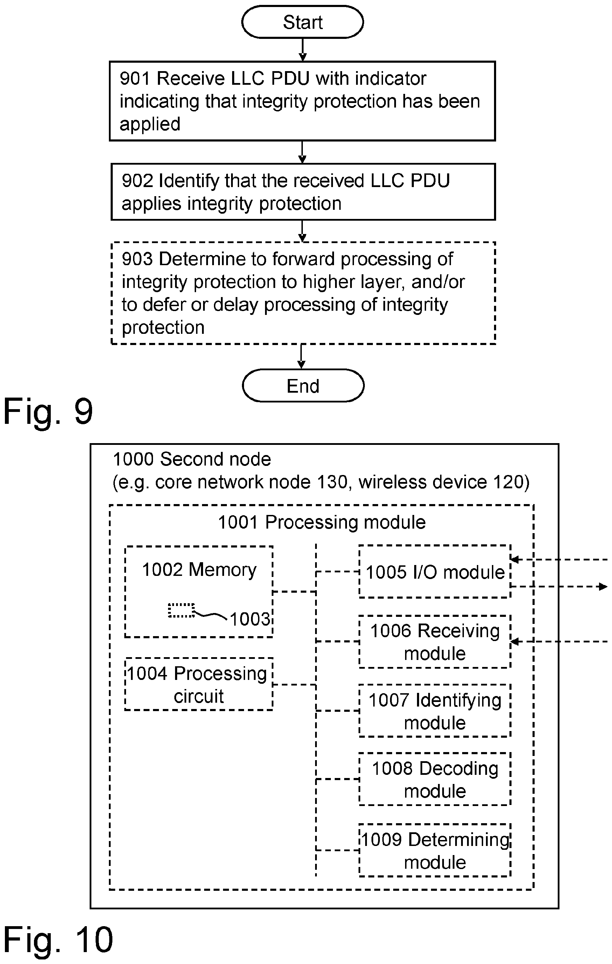

**Figure 9** is a flow chart schematically illustrating embodiments of a second method, performed by a second node, for managing integrity protection of a LLC PDU.

The first method comprises the following actions, which actions may be taken in any suitable order and/or be carried out fully or partly overlapping in time when this is possible and suitable.

### Action 901

The second node receives, from a first node, an LLC PDU with an indicator that indicates that an integrity protection has been applied to at least part of the LLC PDU.

In some embodiments, the first node is a wireless device, e.g. the wireless device 120 and the second node is a core network node, e.g. the core network node 130, configured to be operative in a core network, e.g. the core network 102, part of a wireless communication network, e.g. the wireless communication network 100. In some embodiments, the second node is instead a wireless device, e.g. the wireless device 120, and the first node is instead a core network node, e.g. the core network node 130, configured to be operative in a core network, e.g. the core network 102, part of the wireless communication network, e.g. the wireless communication network 100.

In some embodiments, the indicator indicates that a MAC field is comprised in the LLC PDU, which MAC field relates to said integrity protection. The MAC field may be placed immediately before a FCS field of the LLC PDU. The MAC field is advantageously of a predetermined length. In some embodiments, the MAC field is included in a ciphered portion of the LLC PDU.

In some embodiments, the indicator is comprised in a control field and/or header of the LLC PDU. The indicator may be accomplished by means of one or more specific bits of the control field.

This action may fully or partly correspond to action 302 as described above.

### Action 902

The second node identifies, based on the indication, that the received LLC PDU applies integrity protection.

This action may fully or partly correspond to action 303 as described above.

### Action 903

The second node may determine, based on the identification, to forward processing of the integrity protection to a higher layer, and/or to defer or delay processing of the of the integrity protection to a later point in time.

This action may fully or partly correspond to action 306 as described above.

**Figure 10** is a schematic block diagram for illustrating embodiments of how **a second node 1000** , such as the second node discussed above, e.g. the core network node 130 or the wireless device 120, may be configured to perform the second method and actions discussed above in connection with Figure 3 and 9, and/or one or more other actions described herein.

The second node 1000 may comprise one or more of the following:
**A processing module 1001,** such as a means, one or more hardware modules, including e.g. one or more processors, and/or one or more software modules for performing said methods and/or actions.

**A memory 1002,** which may comprise, such as contain or store, **a computer program 1003.** The computer program 1003 comprises 'instructions' or 'code' directly or indirectly executable by the second node 1000 so that it performs the said methods and/or actions. The memory 1002 may comprise one or more memory units and may be further be arranged to store data, such as configurations and/or applications involved in or for performing functions and actions of embodiments herein.

**A processing circuit 1004** as an exemplifying hardware module and may comprise or correspond to one or more processors. In some embodiments, the processing module 1001 may comprise, e.g. 'is embodied in the form of' or 'realized by' the processing circuit 1004. In these embodiments, the memory 1003 may comprise the computer program 1003 executable by the processing circuit 1004, whereby the second node 1000 comprising it is operative, or configured, to perform said method and/or actions.

**An Input/Output (I/O) module 1005,** configured to be involved in, e.g. by performing, any communication to and/or from other units and/or nodes, such as sending and/or receiving information to and/or from other external nodes or devices. The I/O module 1005 may be exemplified by an obtaining, e.g. receiving, module and/or a sending module, when applicable.

The second node 1000 may also comprise other exemplifying hardware and/or software module(s), which module(s) may be fully or partly implemented by the processing circuit 1004 and that may be operative, or configured, to perform actions as discussed herein. For example, the second node 1000 may comprises one or more of **a receiving module 1006, an identifying module 1007, a decoding module 1008** and a **determining module 1008.**

The second node 1000 and/or the processing module 1001 and/or the processing circuit 1004 and/or the I/O module 1005 and/or the receiving module 1006 may be operative, or configured, to receive, from said first node 800, the LLC PDU with said indicator that indicates that said integrity protection has been applied to at least part of the LLC PDU.

The second node 1000 and/or the processing module 1001 and/or the processing circuit 1004 and/or the identifying module 1007 may be operative, or configured, to identify, based on the indication, that the received LLC PDU applies integrity protection.

Further, the second node 1000 and/or the processing module 1001 and/or the processing circuit 1004 and/or the determining module 1008 may be operative, or configured, to determine, based on the identification, to forward processing of the integrity protection to said higher layer, and/or to defer or delay processing of the of the integrity protection to said later point in time.

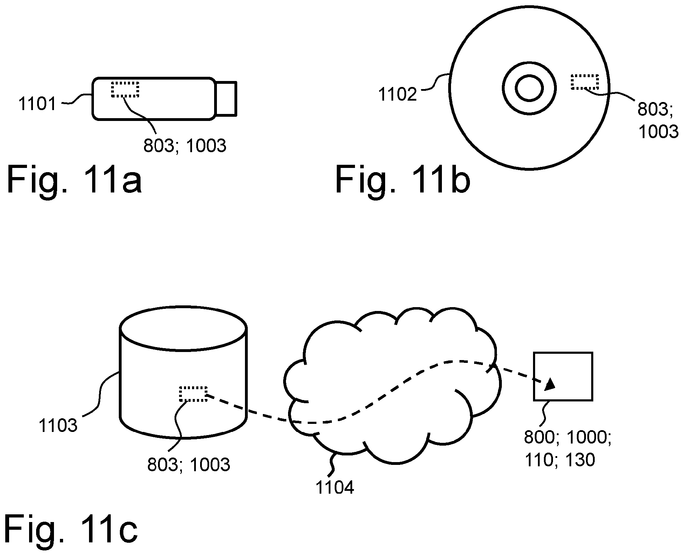

**Figures 11a****-c** are schematic drawings illustrating embodiments relating to a computer program that may be any one of the computer programs 803 and 1103, and that comprises instructions that when executed by the respective processing circuit 804, 1004 causes the node comprising it to perform the respective method as described above.

In some embodiments there is provided a computer program product, i.e. a data carrier, comprising a computer-readable medium and the computer program stored on the computer-readable medium. By computer readable medium may be excluded a transitory, propagating signal and the computer readable medium may correspondingly be named non-transitory computer readable medium. Non-limiting examples of the computer-readable medium is a memory card or **a memory stick 1101** as in Figure 11a, **a disc storage medium 1102** such as a CD or DVD as in Figure 11b, **a mass storage device 1103** as in Figure 11c. The mass storage device 1103 is typically based on hard drive(s) or Solid State Drive(s) (SSD). The mass storage device 1103 may be such that is used for storing data accessible over **a computer network 1105,** e.g. the Internet or a Local Area Network (LAN).

The computer program may furthermore be provided as a pure computer program or comprised in a file or files. The file or files may be stored on the computer-readable medium and e.g. available through download e.g. over the computer network 1105, such as from the mass storage device 1103 via a server. The server may e.g. be a web or File Transfer Protocol (FTP) server. The file or files may e.g. be executable files for direct or indirect download to and execution on the network node for carrying out the method, e.g. by the processing circuit, or may be for intermediate download and compilation to make them executable before further download and execution causing the network nodes to perform the respective method as described above.

Note that any processing module(s) mentioned in the foregoing may be implemented as a software and/or hardware module, e.g. in existing hardware and/or as an Application Specific integrated Circuit (ASIC), a field-programmable gate array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analog and digital circuits, and/or one or more processors configured with software and/or firmware, e.g. stored in memory, that, when executed by the one or more processors make the first node and the second node to be configured to and/or to perform the above-described methods, respectively.

Identification by any identifier herein may be implicit or explicit. The identification may be unique in the wireless communication network 100 or at least in a part or some area thereof.

The term "network node" as used herein may as such refer to any type of radio network node (described below) or any network node, which may communicate with at least a radio network node. Examples of such network nodes include any radio network node stated above, a core network node, Operations & Maintenance (O&M), Operations Support Systems (OSS), Self-Organizing Network (SON) node, positioning node etc.

The term "radio network node" as used herein may as such refer to any type of network node serving a wireless device, e.g. UE, and/or that are connected to other network node(s) or network element(s) or any radio node from which a wireless device receives signals. Examples of radio network nodes are Node B, Base Station (BS), MultiStandard Radio (MSR) node such as MSR BS, eNB, eNodeB, network controller, RNC, Base Station Controller (BSC), relay, donor node controlling relay, Base Transceiver Station (BTS), Access Point (AP), transmission points, transmission nodes, nodes in distributed antenna system (DAS) etc.

The term "wireless device" as used herein, may as such refer to any type of wireless device arranged to communicate with a radio network node in a wireless, cellular and/or mobile communication system, such as the wireless communication network 100, and may thus be referred to as a wireless communication device. Examples include: target devices, device to device UE, device for Machine Type of Communication (MTC), machine type UE or UE capable of machine to machine (M2M) communication, Personal Digital Assistant (PDA), iPAD, Tablet, mobile terminals, smart phone, Laptop Embedded Equipment (LEE), Laptop Mounted Equipment (LME), Universal Serial Bus (USB) dongles etc. While said terms are used frequently herein for convenience, or in the context of examples involving other 3GPP nomenclature, it must be appreciated that the term as such is non-limiting and the teachings herein apply to essentially any type of wireless device.

The term "node" as used herein may as such refer to any type of network node or wireless device, such as described above.

Note that with regard to the downlink, the term "transmitter" may be used herein to refer to a radio network node, e.g. base station, and the term "receiver" may refer to a wireless device.

Note that although terminology used herein may be particularly associated with and/or exemplified by certain cellular communication systems, wireless communication networks etc., depending on terminology used, such as wireless communication networks based on 3GPP, this should as such not be seen as limiting the scope of the embodiments herein to only such certain systems, networks etc.

As used herein, the term "memory" may refer to a hard disk, a magnetic storage medium, a portable computer diskette or disc, flash memory, random access memory (RAM) or the like. Furthermore, the memory may be an internal register memory of a processor.

Also note that enumerating terminology such as first network node, second network node, first base station, second base station, etc., as such should be considering non-limiting and the terminology as such does not imply a certain hierarchical relation. Without any explicit information in the contrary, naming by enumeration should be considered merely a way of accomplishing different names.

## Claims

1. A method, performed by a first node (800; 120; 130), for managing integrity protection of a Logical Link Control, "LLC", Packet Data Unit, "PDU", the first node (120; 130) being configured to communicate in a wireless communication network (100), wherein the method comprises:
- *providing (301; 701)* an LLC PDU with an indicator that indicates that an integrity protection has been applied to at least part of the LLC PDU; and
- *sending (302; 702)* the LLC PDU with the indication to another, second node(1000; 130; 120).

2. The method as claimed in claim 1, wherein the first node (800; 120; 130) is a wireless device (120) and the second node (1000; 130; 120) is a core network node (130) configured to be operative in a core network (102) part of the wireless communication network (100), or wherein the second node (1000; 130; 120) is a wireless device (120) and the first node (800; 120; 130) is a core network node (130) configured to be operative in a core network (102) part of the wireless communication network (100).

3. The method as claimed in any one of claims 1-2, wherein the indicator indicates that a Message Authentication Code, "MAC", field is comprised in the LLC PDU, which MAC field relates to said integrity protection.

4. A method, performed by a second node (1000; 130; 120), for managing integrity protection of a Logical Link Control, "LLC", Packet Data Unit, "PDU", the second node (1000; 130; 120) being configured to communicate in a wireless communication network (100), wherein the method comprises:
- *receiving (302; 901),* from a first node (800; 120; 130), an LLC PDU with an indicator that indicates that an integrity protection has been applied to at least part of the LLC PDU; and
- *identifying (303; 902),* based on the indication, that the received LLC PDU applies integrity protection.

5. The method as claimed in claim 4, wherein the first node (800; 120; 130) is a wireless device (120) and the second node (1000; 130; 120) is a core network node (130) configured to be operative in a core network (102) part of the wireless communication network (100), or wherein the second node (1000; 130; 120) is a wireless device (120) and the first node (800; 120; 130) is a core network node (130) configured to be operative in a core network (102) part of the wireless communication network (100).

6. A first node (800; 120; 130) for managing integrity protection of a Logical Link Control, "LLC", Packet Data Unit, "PDU", the first node (120; 130) being configured to communicate in a wireless communication network (100), wherein the first node (120; 130) is configured to:
provide (301; 701) an LLC PDU with an indicator that indicates that an integrity protection has been applied to at least part of the LLC PDU; and
send (302; 702) the LLC PDU with the indication to another, second node(1000; 130; 120).

7. The first node (800; 120; 130) as claimed in claim 6, wherein the first node (800; 120; 130) is a wireless device (120) and the second node (1000; 130; 120) is a core network node (130) configured to be operative in a core network (102) part of the wireless communication network (100), or wherein the second node (1000; 130; 120) is a wireless device (120) and the first node is a core network node (130) configured to be operative in a core network (102) part of the wireless communication network (100).

8. The first node (800; 120; 130) as claimed in any one of claims 6-7, wherein the indicator indicates that a Message Authentication Code, "MAC", field is comprised in the LLC PDU, which MAC field relates to said integrity protection.

9. The first node (800; 120; 130) as claimed in claim 8, wherein the MAC field is placed immediately before a Frame Check Sequence, "FCS", field of the LLC PDU.

10. The first node (800; 120; 130) as claimed in any one of claims 8-9, wherein the MAC field is of a predetermined length.

11. The first node (800; 120; 130) as claimed in any one of claim 8-10, wherein the MAC field is included in a ciphered portion of the LLC PDU.

12. The first node (800; 120; 130) as claimed in any one of claim 6-11, wherein the indicator is comprised in a control field and/or header of the LLC PDU.

13. The first node (800; 120; 130) as claimed in claim 12, wherein the indicator is accomplished by means of one or more specific bits of the control field.

14. A second node (1000; 130; 120) for managing integrity protection of a Logical Link Control, "LLC", Packet Data Unit, "PDU", the second node (1000; 130; 120) being configured to communicate in a wireless communication network (100), wherein the second node (1000; 130; 120) is configured to:
receive (901), from a first node (800; 120; 130), an LLC PDU with an indicator that indicates that an integrity protection has been applied to at least part of the LLC PDU; and
identify (802), based on the indication, that the received LLC PDU applies integrity protection.

15. The second node (1000; 130; 120) as claimed in claim 14, wherein the first node (800; 120; 130) is a wireless device (120) and the second node (1000; 130; 120) is a core network node (130) configured to be operative in a core network (102) part of the wireless communication network (100), or wherein the second node (1000; 130; 120) is a wireless device (120) and the first node (800; 120; 130) is a core network node (130) configured to be operative in a core network (102) part of the wireless communication network (100).

16. The second node (1000; 130; 120) as claimed in any one of claims 14-15, wherein the indicator indicates that a Message Authentication Code, "MAC", field is comprised in the LLC PDU, which MAC field relates to said integrity protection.

17. The second node (1000; 130; 120) as claimed in claim 16, wherein the MAC field is placed immediately before a Frame Check Sequence, "FCS", field of the LLC PDU.

18. The second node (1000; 130; 120) as claimed in any one of claims 16-17, wherein the MAC field is of a predetermined length.

19. The second node (1000; 130; 120) as claimed in any one of claims 16-18, wherein the MAC field is included in a ciphered portion of the LLC PDU.

20. The second node (1000; 130; 120) as claimed in any one of claims 14-19, wherein the indicator is comprised in a control field and/or header of the LLC PDU.

21. The second node (1000; 130; 120) as claimed in claim 20, wherein the indicator is accomplished by means of one or more specific bits of the control field.

22. The second node (1000; 130; 120) as claimed in any one of claims 14-21, wherein the second node (1000; 130; 120) is further configured to:
determine (905), based on the identification, to forward processing of the integrity protection to a higher layer, and/or to defer or delay processing of the of the integrity protection to a later point in time.

## Patentansprüche

1. Verfahren, das von einem ersten Knoten (800; 120; 130) ausgeführt wird, zum Verwalten des Integritätsschutzes einer Logical Link Control, "LLC", Packet Data Unit, "PDU", wobei der erste Knoten (120; 130) zum Kommunizieren in einem drahtlosen Kommunikationsnetzwerk (100) konfiguriert ist, wobei das Verfahren umfasst:
- *Bereitstellen (301; 701)* einer LLC-PDU mit einem Indikator, der angibt, dass auf mindestens einen Teil der LLC-PDU ein Integritätsschutz angewendet wurde; und
- *Senden (302; 702)* der LLC-PDU mit der Angabe an einen anderen, zweiten Knoten (1000; 130; 120).

2. Verfahren nach Anspruch 1, wobei der erste Knoten (800; 120; 130) eine drahtlose Vorrichtung (120) ist und der zweite Knoten (1000; 130; 120) ein Kernnetzwerkknoten (130) ist, der konfiguriert ist, in einem Kernnetzwerk (102) betriebsfähig zu sein, das Teil des drahtlosen Kommunikationsnetzwerks (100) ist, oder wobei der zweite Knoten (1000; 130; 120) eine drahtlose Vorrichtung (120) ist und der erste Knoten (800; 120; 130) ein Kernnetzwerkknoten (130) ist, der konfiguriert ist, in einem Kernnetzwerk (102) des drahtlosen Kommunikationsnetzwerks (100) betriebsfähig zu sein.

3. Verfahren nach einem der Ansprüche 1 bis 2, wobei der Indikator anzeigt, dass ein Feld für einen Message Authentication Code, "MAC", in der LLC-PDU enthalten ist, wobei sich das MAC-Feld auf den Integritätsschutz bezieht.

4. Verfahren, das von einem zweiten Knoten (1000; 130; 120) ausgeführt wird, zum Verwalten des Integritätsschutzes einer Logical Link Control, "LLC", Packet Data Unit, "PDU", wobei der zweite Knoten (1000; 130; 120) zum Kommunizieren in einem drahtlosen Kommunikationsnetzwerk (100) konfiguriert ist, wobei das Verfahren umfasst:
- *Empfangen (302; 901),* von einem ersten Knoten (800; 120; 130), einer LLC-PDU mit einem Indikator, der anzeigt, dass ein Integritätsschutz auf mindestens einen Teil der LLC-PDU angewendet wurde; und
- *Identifizieren (303; 902),* basierend auf der Angabe, dass die empfangene LLC-PDU einen Integritätsschutz anwendet.

5. Verfahren nach Anspruch 4, wobei der erste Knoten (800; 120; 130) eine drahtlose Vorrichtung (120) ist und der zweite Knoten (1000; 130; 120) ein Kernnetzwerkknoten (130) ist, der konfiguriert ist, in einem Kernnetzwerk (102) betriebsfähig zu sein, das Teil des drahtlosen Kommunikationsnetzwerks (100) ist, oder wobei der zweite Knoten (1000; 130; 120) eine drahtlose Vorrichtung (120) ist und der erste Knoten (800; 120; 130) ein Kernnetzwerkknoten (130) ist, der konfiguriert ist, in einem Kernnetzwerk (102) des drahtlosen Kommunikationsnetzwerks (100) betriebsfähig zu sein.

6. Erster Knoten (800; 120; 130) zum Verwalten eines Integritätsschutzes einer Logical Link Control, "LLC", Packet Data Unit, "PDU", wobei der erste Knoten (120; 130) konfiguriert ist, in einem drahtlosen Kommunikationsnetz (100) zu kommunizieren, wobei der erste Knoten (120; 130) konfiguriert ist zum:
- Bereitstellen (301; 701) einer LLC-PDU mit einem Indikator, der angibt, dass auf mindestens einen Teil der LLC-PDU ein Integritätsschutz angewendet wurde; und
- Senden (302; 702) der LLC-PDU mit der Angabe an einen anderen, zweiten Knoten (1000; 130; 120).

7. Erster Knoten (800, 120; 130) nach Anspruch 6, wobei der erste Knoten (800; 120; 130) eine drahtlose Vorrichtung (120) ist und der zweite Knoten (1000; 130; 120) ein Kernnetzwerkknoten (130) ist, der konfiguriert ist, in einem Kernnetzwerk (102) betriebsfähig zu sein, das Teil des drahtlosen Kommunikationsnetzwerks (100) ist, oder wobei der zweite Knoten (1000; 130; 120) eine drahtlose Vorrichtung (120) ist und der erste Knoten ein Kernnetzwerkknoten (130) ist, der konfiguriert ist, in einem Kernnetzwerk (102) des drahtlosen Kommunikationsnetzwerks (100) betriebsfähig zu sein.

8. Erster Knoten (800; 120; 130) nach einem der Ansprüche 6 bis 7, wobei der Indikator angibt, dass ein Feld für einen Message Authentication Code, "MAC", in der LLC-PDU enthalten ist, wobei sich das MAC-Feld auf den Integritätsschutz bezieht.

9. Erster Knoten (800; 120; 130) nach Anspruch 8, wobei das MAC-Feld unmittelbar vor einem Feld für eine Frame Check Sequence, "FCS", der LLC-PDU angeordnet ist.

10. Erster Knoten (800; 120; 130) nach einem der Ansprüche 8 bis 9, wobei das MAC-Feld eine vorbestimmte Länge hat.

11. Erster Knoten (800; 120; 130) nach einem der Ansprüche 8 bis 10, wobei das MAC-Feld in einem verschlüsselten Abschnitt der LLC-PDU enthalten ist.

12. Erster Knoten (800; 120; 130) nach einem der Ansprüche 6 bis 11, wobei der Indikator in einem Steuerfeld und/oder Header der LLC-PDU enthalten ist.

13. Erster Knoten (800; 120; 130) nach Anspruch 12, wobei der Indikator mittels eines oder mehrerer spezifischer Bits des Steuerfelds erreicht wird.

14. Zweiter Knoten (1000; 120; 130) zum Verwalten eines Integritätsschutzes einer Logical Link Control, "LLC", Packet Data Unit, "PDU", wobei der zweite Knoten (1000; 120; 130) konfiguriert ist, in einem drahtlosen Kommunikationsnetz (100) zu kommunizieren, wobei der zweite Knoten (1000; 120; 130) konfiguriert ist zum:
Empfangen (901), von einem ersten Knoten (800; 120; 130), einer LLC-PDU mit einem Indikator, der anzeigt, dass ein Integritätsschutz auf mindestens einen Teil der LLC-PDU angewendet wurde; und
Identifizieren (802), basierend auf der Angabe, dass die empfangene LLC-PDU einen Integritätsschutz anwendet.

15. Zweiter Knoten (1000; 130; 120) nach Anspruch 14, wobei der erste Knoten (800; 120; 130) eine drahtlose Vorrichtung (120) ist und der zweite Knoten (1000; 130; 120) ein Kernnetzwerkknoten (130) ist, der konfiguriert ist, in einem Kernnetzwerk (102) betriebsfähig zu sein, das Teil des drahtlosen Kommunikationsnetzwerks (100) ist, oder wobei der zweite Knoten (1000; 130; 120) eine drahtlose Vorrichtung (120) ist und der erste Knoten (800; 120; 130) ein Kernnetzwerkknoten (130) ist, der konfiguriert ist, in einem Kernnetzwerk (102) des drahtlosen Kommunikationsnetzwerks (100) betriebsfähig zu sein.

16. Zweiter Knoten (1000; 130; 120) nach einem der Ansprüche 14 bis 15, wobei der Indikator angibt, dass ein Feld für einen Message Authentication Code, "MAC", in der LLC-PDU enthalten ist, wobei sich das MAC-Feld auf den Integritätsschutz bezieht.

17. Zweiter Knoten (1000; 130; 120) nach Anspruch 16, wobei das MAC-Feld unmittelbar vor einem Feld für eine Frame Check Sequence, "FCS", der LLC-PDU angeordnet ist.

18. Zweiter Knoten (1000; 130; 120) nach einem der Ansprüche 16 bis 17, wobei das MAC-Feld eine vorbestimmte Länge hat.

19. Zweiter Knoten (1000; 130; 120) nach einem der Ansprüche 16 bis 18, wobei das MAC-Feld in einem verschlüsselten Abschnitt der LLC-PDU enthalten ist.

20. Zweiter Knoten (1000; 130; 120) nach einem der Ansprüche 14 bis 19, wobei der Indikator in einem Steuerfeld und/oder Header der LLC-PDU enthalten ist.

21. Zweiter Knoten (1000; 130; 120) nach Anspruch 20, wobei der Indikator mittels eines oder mehrerer spezifischer Bits des Steuerfelds erreicht wird.

22. Zweiter Knoten (1000; 130; 120) nach einem der Ansprüche 14 bis 21, wobei der zweite Knoten (1000; 130; 120) weiterhin konfiguriert ist zum:
Bestimmen (905), basierend auf der Identifizierung, die Verarbeitung des Integritätsschutzes an eine höhere Schicht weiterzuleiten und/oder die Verarbeitung des Integritätsschutzes auf einen späteren Zeitpunkt zu verschieben oder zu verzögern.

## Revendications

1. Procédé, réalisé par un premier nœud (800 ; 120 ; 130), permettant de gérer une protection d'intégrité d'une unité de données en paquets, PDU, de commande de liaison logique, LLC, le premier nœud (120 ; 130) étant configuré pour communiquer dans un réseau de communication sans fil (100), dans lequel le procédé comprend :
- *la fourniture* (301 ; 701) d'une PDU LLC avec un indicateur indiquant qu'une protection d'intégrité a été appliquée à au moins une partie de la PDU LLC ; et
- *l'envoi* (302 ; 702) de la PDU LLC avec l'indication à un deuxième nœud (1000 ; 130; 120).

2. Procédé selon la revendication 1, dans lequel le premier nœud (800 ; 120 ; 130) est un dispositif sans fil (120) et le deuxième nœud (1000 ; 130 ; 120) est un nœud de réseau central (130) configuré pour être opérationnel dans une partie de réseau central (102) du réseau de communication sans fil (100), ou dans lequel le deuxième nœud (1000 ; 130 ; 120) est un dispositif sans fil (120) et le premier nœud (800 ; 120 ; 130) est un nœud de réseau central (130) configuré pour être opérationnel dans une partie de réseau central (102) du réseau de communication sans fil (100).

3. Procédé selon la revendication 1 ou 2, dans lequel l'indicateur indique qu'un champ de code d'authentification de message, MAC, est compris dans la PDU LLC, le champ MAC étant lié à ladite protection d'intégrité.

4. Procédé, réalisé par un deuxième nœud (1000 ; 130; 120), permettant de gérer une protection d'intégrité d'une unité de données en paquets, PDU, de commande de liaison logique, LLC, le deuxième nœud (1000 ; 130; 120) étant configuré pour communiquer dans un réseau de communication sans fil (100), dans lequel le procédé comprend :
- *la réception* (302 ; 901), en provenance d'un premier nœud (800 ; 120; 130), d'une PDU LLC avec un indicateur indiquant qu'une protection d'intégrité a été appliquée à au moins une partie de la PDU LLC ; et
- *l'identification* (303 ; 902), sur la base de l'indication, que la PDU LLC reçue applique une protection d'intégrité.

5. Procédé selon la revendication 4, dans lequel le premier nœud (800 ; 120 ; 130) est un dispositif sans fil (120) et le deuxième nœud (1000 ; 130 ; 120) est un nœud de réseau central (130) configuré pour être opérationnel dans une partie de réseau central (102) du réseau de communication sans fil (100), ou dans lequel le deuxième nœud (1000 ; 130 ; 120) est un dispositif sans fil (120) et le premier nœud (800 ; 120 ; 130) est un nœud de réseau central (130) configuré pour être opérationnel dans une partie de réseau central (102) du réseau de communication sans fil (100).

6. Premier nœud (800 ; 120 ; 130) permettant de gérer une protection d'intégrité d'une unité de données en paquets, PDU, de commande de liaison logique, LLC, le premier nœud (120 ; 130) étant configuré pour communiquer dans un réseau de communication sans fil (100), dans lequel le premier nœud (120 ; 130) est configuré pour :
la fourniture (301 ; 701) d'une PDU LLC avec un indicateur indiquant qu'une protection d'intégrité a été appliquée à au moins une partie de la PDU LLC ; et
l'envoi (302; 702) de la PDU LLC avec l'indication à un deuxième nœud (1000; 130; 120).

7. Premier nœud (800; 120; 130) selon la revendication 6, dans lequel le premier nœud (800 ; 120 ; 130) est un dispositif sans fil (120) et le deuxième nœud (1000 ; 130 ; 120) est un nœud de réseau central (130) configuré pour être opérationnel dans une partie de réseau central (102) du réseau de communication sans fil (100), ou dans lequel le deuxième nœud (1000 ; 130 ; 120) est un dispositif sans fil (120) et le premier nœud est un nœud de réseau central (130) configuré pour être opérationnel dans une partie de réseau central (102) du réseau de communication sans fil (100).

8. Premier nœud (800; 120; 130) selon la revendication 6 ou 7, dans lequel l'indicateur indique qu'un champ de code d'authentification de message, MAC, est compris dans la PDU LLC, le champ MAC étant lié à ladite protection d'intégrité.

9. Premier nœud (800; 120; 130) selon la revendication 8, dans lequel le champ MAC est placé immédiatement avant un champ de séquence de contrôle de trame, FCS, de la PDU LLC.

10. Premier nœud (800; 120; 130) selon la revendication 8 ou 9, dans lequel le champ MAC est d'une longueur prédéterminée.

11. Premier nœud (800 ; 120 ; 130) selon l'une quelconque des revendications 8 à 10, dans lequel le champ MAC est inclus dans une portion chiffrée de la PDU LLC.

12. Premier nœud (800 ; 120 ; 130) selon l'une quelconque des revendications 6 à 11, dans lequel l'indicateur est compris dans un champ de commande et/ou dans un en-tête de la PDU LLC.

13. Premier nœud (800 ; 120 ; 130) selon la revendication 12, dans lequel l'indicateur est accompli au moyen d'un ou plusieurs bits spécifiques du champ de commande.

14. Deuxième nœud (1000 ; 130 ; 120) permettant de gérer une protection d'intégrité d'une unité de données en paquets, PDU, de commande de liaison logique, LLC, le deuxième nœud (1000; 130; 120) étant configuré pour communiquer dans un réseau de communication sans fil (100), dans lequel le deuxième nœud (1000; 130; 120) est configuré pour :
la réception (901), en provenance d'un premier nœud (800 ; 120; 130), d'une PDU LLC avec un indicateur indiquant qu'une protection d'intégrité a été appliquée à au moins une partie de la PDU LLC ; et
l'identification (802), sur la base de l'indication, que la PDU LLC reçue applique une protection d'intégrité.

15. Deuxième nœud (1000; 130; 120) selon la revendication 14, dans lequel le premier nœud (800 ; 120 ; 130) est un dispositif sans fil (120) et le deuxième nœud (1000 ; 130 ; 120) est un nœud de réseau central (130) configuré pour être opérationnel dans une partie de réseau central (102) du réseau de communication sans fil (100), ou dans lequel le deuxième nœud (1000 ; 130 ; 120) est un dispositif sans fil (120) et le premier nœud (800 ; 120 ; 130) est un nœud de réseau central (130) configuré pour être opérationnel dans une partie de réseau central (102) du réseau de communication sans fil (100).

16. Deuxième nœud (1000; 130; 120) selon la revendication 14 ou 15, dans lequel l'indicateur indique qu'un champ de code d'authentification de message, MAC, est compris dans la PDU LLC, le champ MAC étant lié à ladite protection d'intégrité.

17. Deuxième nœud (1000; 130; 120) selon la revendication 16, dans lequel le champ MAC est placé immédiatement avant un champ de séquence de contrôle de trame, FCS, de la PDU LLC.

18. Deuxième nœud (1000 ; 130 ; 120) selon la revendication 16 ou 17, dans lequel le champ MAC est d'une longueur prédéterminée.

19. Deuxième nœud (1000; 130; 120) selon l'une quelconque des revendications 16 à 18, dans lequel le champ MAC est inclus dans une portion chiffrée de la PDU LLC.

20. Deuxième nœud (1000; 130; 120) selon l'une quelconque des revendications 14 à 19, dans lequel l'indicateur est compris dans un champ de commande et/ou dans un en-tête de la PDU LLC.

21. Deuxième nœud (1000; 130; 120) selon la revendication 20, dans lequel l'indicateur est accompli au moyen d'un ou plusieurs bits spécifiques du champ de commande.

22. Deuxième nœud (1000; 130; 120) selon l'une quelconque des revendications 14 à 21, dans lequel le deuxième nœud (1000 ; 130 ; 120) est en outre configuré pour :
la détermination (905), sur la base de l'identification, de transférer un traitement de la protection d'intégrité à une couche supérieure, et/ou de différer ou de retarder un traitement de la protection d'intégrité à un moment ultérieur.
